(19) Europäisches Patentamt
European Patent Office
Office européen des brevets

(11) **EP 2 806 584 B1**

(12) **EUROPEAN PATENT SPECIFICATION**

(45) Date of publication and mention of the grant of the patent:
**04.03.2020 Bulletin 2020/10**

(51) Int Cl.:
*H04B 10/61* [(2013.01)]  *H04L 27/227* [(2006.01)]
*H04L 27/00* [(2006.01)]

(21) Application number: **13305677.0**

(22) Date of filing: **24.05.2013**

(54) **Apparatus, method and computer program for recovering a phase of a received signal**

Vorrichtung, Verfahren und Computerprogramm zur Rückgewinnung einer Phase eines empfangenen Signals

Appareil, procédé et programme informatique pour récupérer une phase d'un signal reçu

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.11.2014 Bulletin 2014/48**

(73) Proprietor: **Alcatel Lucent**
**91620 Nozay (FR)**

(72) Inventors:
• **Razzetti, Luca Gabriele**
**20059 Vimercate, MI (IT)**
• **Gavioli, Giancarlo**
**20059 Vimercate, MI (IT)**
• **Pepe, Marianna**
**20059 Vimercate, MI (IT)**
• **Costantini, Carlo**
**20059 Vimercate, MI (IT)**

(74) Representative: **Browne, Robin Forsythe et al**
**Hepworth Browne**
**15 St Paul's Street**
**Leeds LS1 2JG (GB)**

(56) References cited:
**US-A1- 2013 064 329**

• **BISPLINGHOFF A ET AL: "Slip-reduced carrier phase estimation for coherent transmission in the presence of non-linear phase noise", OPTICAL FIBER COMMUNICATION CONFERENCE AND EXPOSITION AND THE NATIONAL FIBER OPTIC ENGINEERS CONFERENCE (OFC/NFOEC), 2013, IEEE, 17 March 2013 (2013-03-17), pages 1-3, XP032427236, ISBN: 978-1-4799-0457-0**
• **IBRAGIMOV E ET AL: "Cycle slip probability in 100G PM-QPSK systems", OPTICAL FIBER COMMUNICATION (OFC), COLLOCATED NATIONAL FIBER OPTIC ENGINEERS CONFERENCE, 2010 CONFERENCE ON (OFC/NFOEC), IEEE, PISCATAWAY, NJ, USA, 21 March 2010 (2010-03-21), pages 1-3, XP031677008,**

**Description**

Embodiments of the present invention generally relate to communication systems and, in particular, to apparatuses and methods for carrier phase recovery.

**Background**

In optical data transmission, digital data may be transmitted by means of an optical transmission signal. The optical transmission signal is generated, by modulating the phase of an optical carrier signal, which possesses a carrier frequency, in dependence on the transmitted data values and in accordance with a constellation diagram of a respective Phase-Shift Keying (PSK) modulation method. Each point of the constellation diagram represents a finite set of data bits that are to be transmitted. Such a set of data bits is called a data symbol. A data symbol is represented by a corresponding constellation point of a constellation diagram, wherein the constellation point has a corresponding symbol phase value. Depending on the data symbols that are to be transmitted, respective constellation points and symbol phase values are derived. The phase of the optical carrier signal is modulated, such that it corresponds to the derived symbol phase values representing the transmitted data symbols.

An example for a phase-shift keying modulation method is Binary Phase-Shift Keying (BPSK), in which each point of the corresponding constellation diagram represents one bit and in which adjacent constellation points are separated by a separation angle that has an absolute value of $\pi$. Another example of a phase-shift keying modulation methods is Quadrature Phase-Shift Keying (QPSK), in which each constellation point represents two bits and in which adjacent constellation points are separated by a separation angle that has an absolute value of $\pi/2$.

At a receiving side, data detection may be carried out using a coherent reception scheme: the received optical transmission signal is mixed with a coherent optical signal that possesses the carrier frequency and a phase, which is ideally equal to the phase of the optical carrier signal. This mixing yields a resulting optical baseband signal. The optical baseband signal is converted to a sampled electrical signal via analogue-digital conversion, and the phase of the sampled electrical signal is estimated for deriving received data values. Using a hard-decision detection scheme, it is decided for that point of the constellation diagram, whose symbol phase value is most similar to the estimated phase of the received optical carrier signal. From the estimated symbol phase values corresponding data symbols and corresponding data valued are then derived.

When transmitting optical signals over a non-ideal optical transmission channel, the phase of the transmitted optical carrier signal may be changed due to transmission distortions caused by linear and/or non-linear effects of the optical transmission channel. At least some of current 100Gbit/s optical transceivers employ PM-QPSK (Polarization-Multiplexed Quadrature phase-shift keying) and PM-QAM (Polarization-Multiplexed Quadrature amplitude modulation) modulation formats and intradyne digital coherent receivers. In an intradyne receiver an incoming signal is not precisely shifted to baseband as in a homodyne receiver but shifted to a frequency much lower than a data transmission rate. Hence, a PLL (Phase Locked Loop) may be avoided and filter bandwidth may be chosen larger than in homodyne detection. In an intradyne transmission or communication system the incoming optical signal can be mixed by means of a polarization and phase diversity optical front end with an optical signal emitted by a local receiver laser. The receiver local laser frequency is not locked to the incoming signal but might slightly differ by a value much smaller than the modulation symbol-rate. Further, phase error or phase noise in the received signal may typically be caused by non-zero linewidth of the receiver laser. Due to phase noise a phase of the optical transmission signal may be changed by an absolute phase error that is even greater than half of the separation angle of the constellation diagram. The result of such a phase error in combination with hard decision detection would be false estimated symbol phase values and thus false derived data values for the amount of time, for which the phase error remains to exceed half of the separation angle. If the data values are for example data bits, then false estimated symbol phase values caused by such a phase error may result in bit inversion of one or more data bits represented by a data symbol.

Estimation and compensation of a residual phase and frequency error may be performed after Analogue to Digital (AD) conversion by Digital Signal Processing (DSP) algorithms for carrier (phase) recovery and demodulation. Mostly due to implementation constrains, DSP operations currently implemented in coherent receivers are based on non-data aided, or blind, equalization and synchronization algorithms. Blind carrier phase recovery algorithms have the key advantage of using the contribution of all transmitted symbols for channel estimation and thus exibit fast carrier phase and frequency tracking, as required by optical transmission. However, they generally suffer from phase ambiguity due to so-called phase or cycle slips, which prevents absolute phase estimation of the received carrier or communication channel. In particular, phase slips may occur due to instantaneous large noise components superimposing the carrier wave component hence leading to significant rotations of instantaneous phase estimates. A difference between consecutive phase estimates may be as large as to cause an erroneous rotation of a reference coordinate system (or the constellation diagram) in the receiver. As a consequence, the demodulated signal will be temporarily phase rotated with respect to a receiver phase reference from the time instant the slip event has occurred to the next slip event. This may lead to erroneous detection of information symbols or bits. A typical probability of phase slips in optical communications is for example $10^{-6}$ to $10^{-2}$.

This problem may commonly be overcome in conventional systems using differential encoding, which relay on encoding information on the phase change rather than on the absolute phase value. However, the use of differential decoding may lead to significant receiver sensitivity penalties that can exceed 1dB at SD-FEC (Soft-Decision Forward Error Correction) target Bit Error Rate (BER) for QPSK (Quadrature Phase-Shift Keying). The sensitivity penalties associated with differential decoding can be partially overcome by resorting to a solution based on iterative decoding of a serial concatenation of a differential code and a forward error correcting code, which takes into account random phase slips of the channel. However, this approach leads to significant implementation complexity, accounting for most of receiver DSP power consumption, potentially preventing to scale to higher data rates in one single integrated circuit DSP block.

An alternative approach, widely used in radio communications, is to avoid differential encoding by periodic insertion of time-division multiplexed pilot symbols. Pilot symbols provide the carrier phase recovery circuit with the transmitter phase reference which can be used for absolute phase error estimation and carrier phase tracking at the receiver. Since pilot symbols do not carry information, one would like to keep their rate as low as possible in order not to reduce the information data rate or to introduce SNR penalties. However, in fibre communication, the carrier phase recovery circuit requires to perform phase estimation on each symbol, i.e. symbol-by-symbol, to efficiently track the carrier phase noise which is a fast random process introduced by the laser source and fibre nonlinearities on the optical carrier. Operating with low pilot rate leads to a reduction on the demodulator phase noise tracking abilities and thus to frequent phase errors even in presence of moderate laser phase noise.

Recently a dual-stage carrier phase recovery scheme operating with low pilot-rate has been proposed in M. Magarini, L. Barletta, A. Spalvieri, F. Vacondio, T. Pfau, M. Pepe, M. Ber-tolini and G. Gavioli, "Pilot-Symbols Aided Carrier Phase Recovery for 100G PM-QPSK Digital Coherent Receivers", IEEE Photonics Technology Letters, Volume: 24, Issue: 9, Pages: 739 - 741, Publication Year 2012, where pilot symbols are only used for coarse phase tracking. Fine carrier phase estimation then follows based on conventional blind carrier phase recovery algorithms, such as described in T. Pfau, S. Hoffmann, and R.Noe, "Hardware-efficient coherent digital receiver concept with feedforward carrier recovery for M-QAM constellations," Journal of Lightwave Technology, Volume: 27, Issue: 8, Pages: 989-999, Publication Year: 2009, operating with a limited phase tracking range $\pm\pi/4$ to avoid phase slips. However, due to the limited phase tracking range, this scheme leads to frequent phase errors whose statistics depends on the nonlinear phase noise properties of the communication channel, for which an analytical solution is missing and thus hard to predict.

A further method and implementation for the reduction of phase-slips in optical communication systems is disclosed in US 2013/0064329 A1. This method includes obtaining a phase estimate modulo $2\pi/N$ at the times of reception of reference symbols; forming a trellis with nodes and branches between adjacent nodes where the nodes at one time of said times are labeled by said estimate at that time plus distinct multiples modulo $2\pi$ of $2\pi/N$; assigning to the nodes at said time weights dependent on the difference modulo $2\pi$ between said nodes labels and the received reference symbol angle at said time; assigning to each branch a length dependent on the difference modulo $2\pi$ between the labels of the branch end nodes; determining a decision path that is a shortest path traversing the trellis, where the length of a path is the sum of the branch lengths and node weights on said path; and for each received data symbol, determining a demodulation angle by interpolating between the node labels on the decision path.

It is desirable to improve conventional carrier phase recovery schemes.

## Summary

When transmitting a (carrier) signal over an (optical) transmission or communication channel, the signal's phase may be degraded by the communication channel by a phase offset. When estimating the phase offset, i.e. the phase of the channel, and then correcting the phase of the (PSK) modulated optical signal by the estimated phase offset, there is a risk that the estimated phase offset may be erroneous to a degree, such that the correction of the received optical signal by the estimated phase offset can be interpreted as a rotation of the modulation constellation diagram by a whole numbered multiple of the separation angle. In other words, this rotation of the modulation constellation diagram can be caused by the combination of the phase-offset of the communication channel and a correction of the received signal by a falsely estimated phase offset. If such a rotation of the constellation diagram occurs from one data symbol to a next successive data symbol, this is commonly referred to as phase slip or cycle slip. In other words, a phase slip may be caused by a communication channel in combination with a phase correction using an estimated phase offset value. A typical value for a probability of a phase slip of an optical channel in combination with a phase offset estimation/correction is for example $10^{-2}$ to $10^{-4}$.

An undetected phase slip typically leads to falsely demodulated data symbols for the time instance of the phase slip occurrence and for further successive time instances after the phase slip.

The invention is defined and limited by the scope of appended claims. In the following description, any embodiment(s) referred to and not falling within the scope of the appended claims, is (are) merely example(s) useful to the understanding of the invention.

In a first aspect of the invention there is provided apparatus for recovering a phase of a received signal carrying pilot and information symbols, the apparatus in accordance with claim 1.

In a further aspect there is provided a method for recovering a phase of a received signal carrying pilot and information symbols, the method in accordance with claim 14.

Some embodiments also provide digital control circuitry installed within the apparatus for performing the method. Such a digital control circuit, e.g. a Digital Signal Processor (DSP) or an Application-Specific Integrated Circuit (ASIC), needs to be programmed accordingly. Hence, a further aspect of the invention relates to a computer program according to claim 15.

According to some embodiments the apparatus, the method and/or the computer program may be applied to optical communications. In particular, the apparatus, the method and/or the computer program may be applied to coherent optical transceivers for receiving high data rate (e.g. $\geq$ 100Gbit/s) optical signals.

Embodiments propose a phase estimator architecture which utilizes a (coarse) phase slip detection scheme only based on pilot symbols, which may be periodically time-multiplexed with information symbols to correct for a phase ambiguity and for phase slips introduced by the phase estimation, which may employ a blind phase estimation scheme. The pilot-based phase slip detection scheme together with the (blind symbol-by-symbol) phase estimation scheme allows performing absolute phase detection, hence removing the need for differential encoding.

With respect to existing solutions which employ pilot symbols for absolute phase tracking, embodiments may provide two key advantages. Firstly, a pilot-rate, i.e. the rate of pilot symbols, can be dimensioned only to track the rare event of a phase slip, while demodulation relies on blind phase estimation for fast tracking of carrier or channel phase noise. Given that phase slips are rare events, embodiments may allow having absolute phase estimation with low pilot-rate while retaining the fast phase tracking range of blind phase estimation. Secondly, using pilot symbols for slip detection only, rather than for phase tracking, it allows having an analytical description of the residual phase errors after demodulation as a function of the two main system design parameters: the receiver SNR and link probability of phase slips.

### Brief description of the Figures

Some embodiments of apparatuses and/or methods will be described in the following by way of example only, and with reference to the accompanying figures, in which

Fig. 1 schematically illustrates a first embodiment of an apparatus for recovering a phase of a received signal;

Fig. 2a shows a schematic implementation for a blind phase estimator;

Fig. 2b shows an equivalent model for a communication channel including a blind phase estimator in presence of phase slips;

Fig. 2c shows an exemplary trellis for 4-fold symmetry modulation formats;

Fig. 3 schematically illustrates an embodiment of an apparatus comprising a phase slip detector with hard decision maximum likelihood detector and phase slip correction;

Fig. 4 schematically illustrates an embodiment of an apparatus comprising a phase slip detector with hard decision maximum likelihood detector and fine phase slip correction;

Fig. 5 schematically illustrates an embodiment of an apparatus comprising a phase slip detector with soft decision maximum likelihood detector and soft phase slip correction;

Fig. 6 schematically illustrates an embodiment of an apparatus comprising a phase slip detector with MAP detector and soft phase slip correction; and

Fig. 7 schematically illustrates an embodiment of a method for recovering a phase of a received carrier signal.

### Detailed Description

Various example embodiments will now be described more fully with reference to the accompanying drawings in which some example embodiments are illustrated. In the figures, the thicknesses of lines, layers and/or regions may be exaggerated for clarity.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

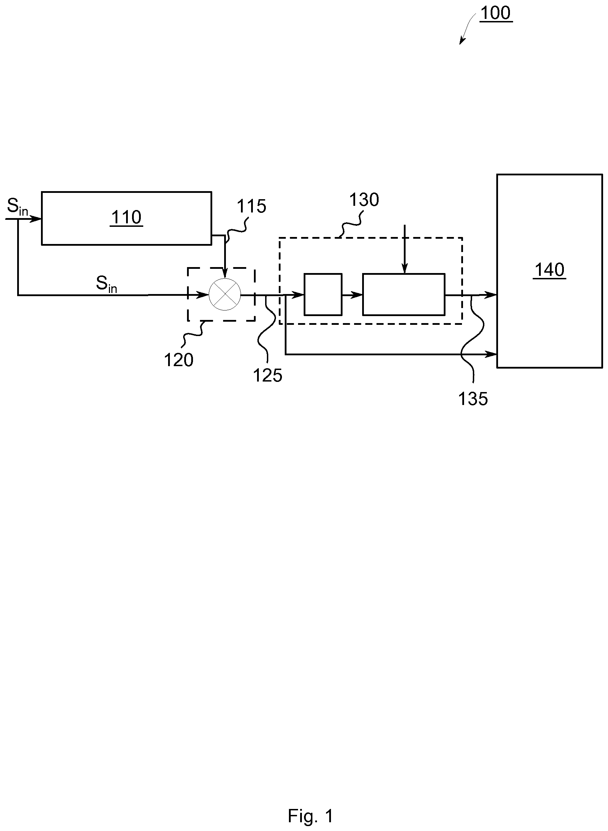

Fig. 1 illustrates a block diagram of an exemplary embodiment of an apparatus 100 for recovering a phase of a received (carrier) signal $S_{in}$ carrying pilot as well as information symbols. According to some embodiments the pilot and information symbols may be arranged in a time-multiplexed manner in the signal $S_{in}$. Thereby a rate of periodically inserted pilot symbols may be significantly smaller than a rate of information symbols, leading to a possibly high information throughput. Possible rates of the pilot symbols or pilots may correspond to an anticipated probability of phase slips. In optical communications the pilot rate may for example be in the range from $10^{-4}$ to $10^{-1}$.

The apparatus 100 comprises a phase estimator 110 which is operable or configured to determine a phase estimate 115 of the actual phase of the communication channel e.g. based on a blind signal processing scheme using (statistics of) the received signal $S_{in}$. Thereby the phase estimator 110 may commit a phase slip with a phase slip probability depending on the communication channel. As mentioned before, phase slip probability values may lie in the range range from $10^{-6}$ to $10^{-2}$ for optical communications. An output 115 of the phase estimator 110 may be coupled to an input of a demodulator 120 which is operable or configured to determine a demodulated signal 125 comprising demodulated pilot and information symbols based on a coherent reception or demodulation of the received pilot and information symbols carried by the signal $S_{in}$ using the determined phase estimate 115. Demodulated pilot symbols of the demodulated signal 125 are coupled to a phase slip detector 130 which is operable or configured to detect a phase slip (committed by the phase estimator 110) based on a phase difference between at least one demodulated pilot symbol and at least one corresponding transmitted pilot symbol. Information 135 indicative of a detected phase slip is coupled to a phase corrector 140 which is operable to correct a phase of demodulated information symbols carried by the signal 125 based on the detected phase slip.

Various modes of operation of the apparatus 100 will be detailed in the remainder of this specification.

A phase of the received signal $S_{in}$, i.e. the carrier phase, may also be understood as the phase of the carrier signal due to an influence of the communication channel from a transmitter to a receiver. Thereby the communication channel may be an optical or a fiber channel according to some embodiments affecting a phase rotation of a transmitted signal. The aforementioned PM-QPSK or PM-QAM modulation schemes are rather sensitive to impairments in the communication channel. In particular, phase noise e.g. caused by a non-zero linewidth of lasers is an impairment that needs to be compensated for prior to data detection on the receiver side. Phase noise may be characterized by the product $\Delta_f T$, where $\Delta_f$ is the sum linewidth of the signal $S_{in}$ and local oscillator lasers, and $1/T$ is the symbol rate. So-called Symbol-By-Symbol Phase Estimators (SBSPE) are one way to cope with values of $\Delta_f T > 10^{-3}$, for example, which may typically occur in optical transmission systems.

Hence, the phase estimator 110 of the apparatus 100 may employ one or more known blind estimation techniques to extract symbol-by-symbol (channel) phase estimates 115 from the received signal $S_{in}$, i.e., a blindly estimated phase estimate 115 may be provided for each pilot and information symbol of the received noisy signal $S_{in}$, thereby leading to a rate of phase estimates 115 corresponding to the symbol rate $1/T$ of the signal $S_{in}$. Blind estimation is a digital signal processing technique in which a transmitted signal may be inferred from the received signal, while making use only of the received signal statistics. Blind phase estimation employed in the phase estimator 110 can be performed by nearly any blind search technique, such as the Viterbi & Viterbi or the Maximum Likelihood Phase Search (MLPS) algorithm, as for example described in T. Pfau, S. Hoffmann, and R.Noe, "Hardware-efficient coherent digital receiver concept with feedforward carrier recovery for M-QAM constellations," Journal of Lightwave Technology, Volume: 27, Issue: 8, Pages: 989-999, 2009, followed by phase unwrapping. Such blind estimation techniques are well known and will therefore not be detailed any further in this specification.

An estimated phase of the phase estimator 110 may be chosen from [0, separation angle of the constellation diagram], e.g. [0, $\pi/2$] for QPSK or another arbitrary $\pi/2$-wide fixed interval, depending on the order of modulation. Such a (raw) phase estimate is commonly referred to as "wrapped" phase. The wrapped estimated phase has to be unwrapped. Hence, embodiments of the phase estimator 110 are operable to apply phase unwrapping to the received signal $S_{in}$. An objective of phase unwrapping is to remove 'discontinuity' in the raw estimated phase noise sequence. The reason of this 'discontinuity' is that in practice the phase may have values between 0 and $2\pi$, and in digital signal processing the estimation results are limited to the range of [0, $\pi/2$] for QPSK. Values between 0 and $2\pi$ may be obtained by additionally taking a currently assumed receiver phase reference into account. This currently assumed receiver phase reference may be interpreted to determine the angular orientation (orientation) of the constellation diagram system in the complex plane. For QPSK modulation schemes, for example, there are four possible receiver phase references or communication channel states, corresponding to different constellation diagram orientations (shifted by the separation angle of $\pi/2$, respectively) used by the receiver. For example, assuming that small phase noise step between consecutive data symbols in the signal $S_{in}$ is more likely than a large one, we need to find a value nearest to a previous unwrapped phase noise estimate $\theta^r_{k-1}$ among $\theta^r_k + m * \pi/2$ (wherein $\theta^r_k$ denotes the current raw phase noise estimate), where m is an integer ranging from $-\infty$ to $\infty$, and take this value as the unwrapped phase noise estimate $\theta^u_k$. For example, if we get the results as $\theta^u_{k-1} = \pi/10$ and $\theta^r_k = 9\pi/10$, $\theta^r_k$ may be unwrapped to $-\pi/10$ instead of keeping it $9\pi/10$, because the phase noise step - $\pi/5$ is more reasonable than $4\pi/5$.

In general a phase unwrapper may correct raw estimated (radian) phase angles by adding multiples of $\pm$M radian, when absolute jumps between consecutive input phase values are greater than or equal to the default jump tolerance of K radian.

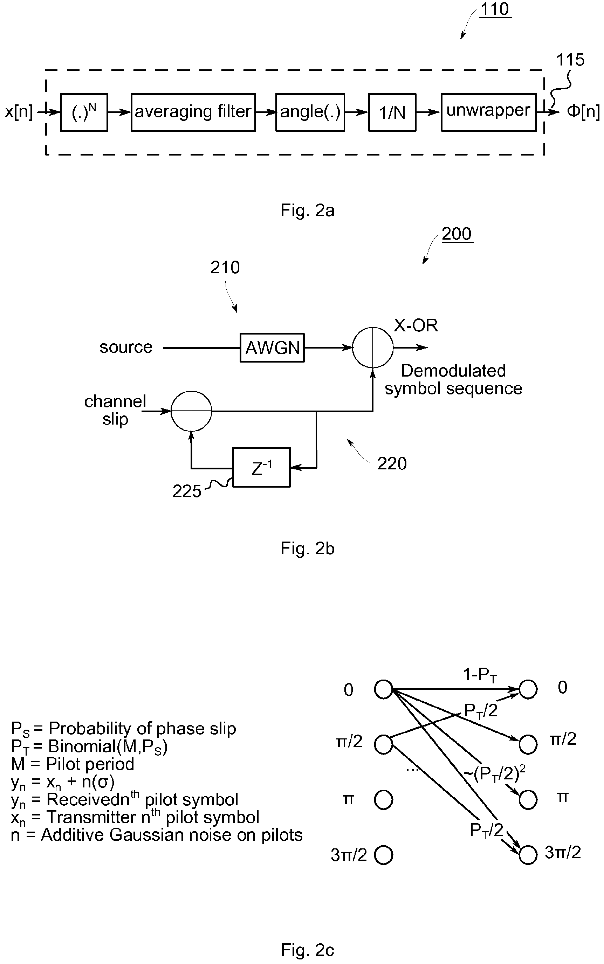

Fig. 2a shows an exemplary implementation for a blind phase estimator 110.

An input symbol sequence x[n] may be raised to the $N^{th}$ power to remove modulation and may then be filtered to remove noise. Then, the angle of the filtered signal may be taken and divided by N. Thus, the resulting raw phase estimate may be restricted to the range $\pm\pi/N$. Then unwrapping may be used to unwrap the phase in the $\pm2\pi$ range. When phase unwrapping is used with a phase estimator to track phase variation of an incoming signal, then M corresponds to the constellation symmetry and K to M/2. Thus, for the case of binary modulation format, such as BPSK, the constellation symmetry equals to $\pi$, and thus M = $\pi$ and K = $\pi/2$. For a quaternary modulation format, such as QPSK, the constellation symmetry equals to $\pi/2$, and thus M = $\pi/2$ and K = $\pi/4$.

The phase estimator 110 will commit phase or cycle slips with a probability $P_S$ which depends on statistical properties of the phase noise present on the received signal $S_{in}$ (or the channel) carrying the pilot and information symbols. Phase slip is a common phenomenon in fiber-optic communication systems. It may be interpreted as a change of a receiver operating point (receiver phase reference) that occurs during a measurement. During normal operation, a difference between the true and estimated phase noise exhibits only small variations around a stable operating point which corresponds to an assumed absolute channel phase. However, due to noise disturbances, and for 4-fold symmetry modulation formats (e.g. QPSK), a sudden $\pi/2$ error may happen during phase unwrapping in the phase estimator 110, and the following or subsequent phase estimates will "lock" on this wrong unwrapped phase estimate. Therefore the phase noise difference between the true and estimated phase noise may slip from the initial stable operating point (e.g. $3\pi/2$) to an adjacent stable operating point (e.g. 0 in case of positive slip, or $\pi$ in case of negative slip). Those stable operating points may also be understood as channel (phase) states as they are related to assumed absolute channel phases.

Hence, turning now to Fig. 2b, a communication channel 200 affected by phase slip can be equivalently modeled as a channel 220 with an error probability function for the probability of phase slip, over an AWGN channel 210. The resultant channel model is shown in Fig. 2b. It can be seen that the communication channel 200 may be modelled as a channel with memory as it comprises a delay element 225. This is because a previously occurred phase slip influences the decision on subsequent phase estimates, or, the previously occurred phase slip influences subsequent channel states. Hence, given that the event of a phase slip introduces a constant phase offset from the time instant the slip event occurs to the next phase slip event, the channel 200 can be modelled as a "Markov chain", having a set of channel states (e..g. for QPSK: 0, $\pi/2$, $\pi$, $3/2\pi$) corresponding to a difference between the receiver phase reference and all possible phase rotation angles caused by a phase slip. In presence of no phase slip the source and receiver phase reference are aligned, however the channel state, i.e. the state where the channel 200 is found at a given time, will change from one state to another when a phase slip event occurs.

One idea of embodiments is to detect the event of a phase slip by estimating subsequent channel states and to use this information to help the receiver apparatus taking decision on the received symbol phase.

The received signal $S_{in}$ as well as an output 115 of the phase estimator 110 may be coupled to the demodulator 120 which can determine demodulated pilot and information symbols 125 based demodulation of the received pilot and information symbols comprised by the signal $S_{in}$ using the determined instantaneous phase estimate 115 and the currently assumed channel state (currently assumed receiver phase reference). For example, if the currently assumed channel state is $3/2\pi$ and an unwrapped phase estimate 115 is $\pi/10$, the demodulator may rotate a non-demodulated symbol by $-(3/2\pi + \pi/10) = -8/5\pi$ to get a demodulated symbol. Thereby the foregoing angular computation holds for a separation

angle of $\pi/2$, which is true for QPSK, for example. The true channel state can only be determined at pilot symbol positions, i.e. pilot symbols may be used for absolute phase tracking. In case of coherent demodulation a signal used for demodulation purpose is (ideally) in phase and frequency synchronism with a signal used for modulation. The demodulator 120 phase-rotates each symbol by the negative value of the phase estimate 115. After demodulation with the estimated phase 115, the phase noise will (ideally) be compensated and the signal 125 will be left with Additive White Gaussian Noise (AWGN) from the communication channel and with phase slips introduced by the process of phase estimation in block 110.

The phase slip detector 130, which may be arranged downstream (or after) to the demodulator 120, is operable or configured to detect a phase slip based on a (phase) difference between at least one demodulated pilot symbol (downsampled from the demodulated symbol sequence 125) and at least one corresponding known transmitted pilot symbol. That is to say that a phase slip may be detected by taking the phases of both a demodulated and the corresponding (known) transmitted pilot into account. From this the true absolute channel phase, and hence the corresponding channel state, may be derived. Therefore the phase slip detector 130 may also interpreted to be operable to detect a channel phase state and/or a channel phase state transition based on the (phase) difference between at least one demodulated pilot symbol and at least one corresponding transmitted pilot symbol. That is to say, the slip detection may determine both the channel state (which may be used for slip correction) and the channel state transition (corresponding to a slip event). While in less complex embodiments there may be a simple pilot-per-pilot phase comparison, more elaborate embodiments may use Decision-Feedback (DF) detectors or still more complex sequence detectors, as will be explained below. Note that the true current channel (phase) state (corresponding to the receiver phase reference to be used for demodulation) or transitions between different channel (phase) states may be detected based on demodulated pilot symbols and corresponding transmitted pilot symbols which are known to the receiver. That is to say, according to embodiments the phase slip detector 130 may perform an initial coarse phase slip detection only based on consecutive pilot symbol positions. Information symbols are not required for the coarse phase slip detection performed by the phase slip detector 130. It is referred to "coarse" phase slip detection as a phase slip may at first only be detected from one pilot symbol to the subsequent pilot symbol. Note that the rate of (periodic) pilot symbols will typically be much lower than the information symbol rate, wherein a plurality of information symbols may be placed in between two consecutive pilot symbols.

A coarse phase slip detection algorithm used by the phase slip detector 130 may hence work on pilot symbols only. Thus, first demodulated pilot symbols may be extracted (e.g. by down-sampling) from the demodulated signal sequence 125. Then, based on observation of the received and demodulated pilot symbol phases with respect to their expected values, which are known at the receiver, the channel state for each pilot symbol may be detected, as well as the event of a phase slip which corresponds to a channel state transition between two adjacent pilot symbol positions. Given that the demodulated signal 125 has memory because it is affected by phase slips which introduce correlation between the phases of consecutive symbols, the optimum phase slip detector is a detector which bases its decision on an observation of a sequence of received and demodulated (and down-sampled) pilot symbols over successive signal intervals. Hence, according to embodiments a detected phase slip corresponds to a transition between two channel states of a Markov chain modeling a communication channel 200 with memory for the received carrier signal $S_{in}$. Thereby a channel state may correspond to one of a plurality of rotation angles of a signal constellation diagram and the phase slip detector 130 may be operable to base its detection of the phase slip on an observation of a sequence of received pilot symbols indicating a sequence of channel states. According to embodiments different kinds of "optimum detectors" can be applied to the AWGN channel with memory (see Fig. 2b). For example, the phase slip detector 130 may employ a Maximum Likelihood (ML) sequence detector or a Maximum A Posteriori probability (MAP) detector. Hence, the phase slip detector 130 may comprise a ML sequence detector or a MAP detector, the ML sequence or MAP detector having a detector input for a sequence of demodulated pilot symbols and a detector output indicative of at least one channel state and/or a channel state transition corresponding to a phase slip produced by the phase estimator 110. Thereby a channel state transition between two consecutive pilots indicates that a phase slip has occurred between the two pilot symbol positions. A phase slip detector decoding algorithm according to embodiments can either be solved to produce hard decisions on the channel states in correspondence of each received pilot symbol or to compute soft decisions (e.g. likelihoods) associated with the channel states.

Turning now to Fig. 2c, a trellis diagram 250 may be designed to represent all possible channel (phase) states and trajectories. Thereby a trellis denotes a graph whose nodes (corresponding to states) are ordered into vertical slices (time), and with each node at each time connected to at least one node at an earlier and at least one node at a later time. The trellis diagram 250 of Fig. 2c illustrates the exemplary case of 4-fold symmetry modulation formats (e.g. QPSK). The transition probabilities $P_T$ of the trellis depend on the pilot rate $1/M$ and on the signal probability of phase slips $P_S$ after phase estimation and demodulation. $P_T$ denotes the probability that a phase slip occurs between two consecutive pilot symbol positions having a periodicity of M symbols. Note that $P_T$ will be larger than a probability $P_S$ which denotes the symbol-by-symbol phase slip probability. Different well-known algorithms can be used for the trellis search, and be designed to work with modulation formats having different N-fold constellation symmetry. In case of a 2-fold symmetry modulation format, e.g. BPSK, the trellis would have two states (e.g. 0 and $\pi$), for example. We define a detector decoding algorithm which output a hard decision as "hard slip detection" and those which output probabilities as "soft slip detection". Hence, the phase slip detector 130 may be operable to provide a hard or a soft decision indicative of a channel state and/or a channel state transition at the detector output. In particular, the phase slip detector 130 may be operable to perform Maximum Likelihood Sequence Estimation (MLSE) based on a hard or soft output Viterbi algorithm or to perform Maximum A Posteriori probability (MAP) detection based on the BCJR (BCJR = Bahl, Cocke, Jelinek, Raviv) algorithm. The mentioned algorithms are all well-known in the art, wherefore a detailed description of the algorithms is omitted here for the sake of brevity.

The phase corrector 140 of Fig. 1 is operable or configured to correct the phase of demodulated information symbols based on the detected phase slip which corresponds to a channel state transition. In other words, the outputs of the phase slip detector 130 are used to take decisions on the phase of the information symbols in a pilot block where the phase slip has occurred. Thereby a pilot block may be defined as a set of information symbols transmitted around one or more adjacent pilot symbols. Given that the phase slip detector 130 can either output hard or soft decisions on the channel states (e..g for QPSK: 0, $\pi/2$, $\pi$, $3/2\pi$) there may be two different kinds of slip correction algorithms employed be the phase corrector 140. In case of "hard slip correction" (corresponding to "hard slip detection") the phase of the information symbols in the "phase slipped" pilot block may be correspondingly "flipped" or rotated to be aligned with the actual receiver phase reference or channel state. In case of "soft slip correction" (corresponding to "soft slip detection") the channel state likelihoods determined on the pilot symbol positions may be taken into account for a calculation of the Log-Likelihood Ratios (LLRs) for the information symbols in the pilot block, used for downstream (or subsequent) soft decision forward-error-correction (SD-FEC) decoding. The choice between "hard" or "soft" slip correction algorithms may depend on a forward error correction scheme employed by the receiver. Soft slip correction may be beneficial if combined with soft-decision forward error correction decoding.

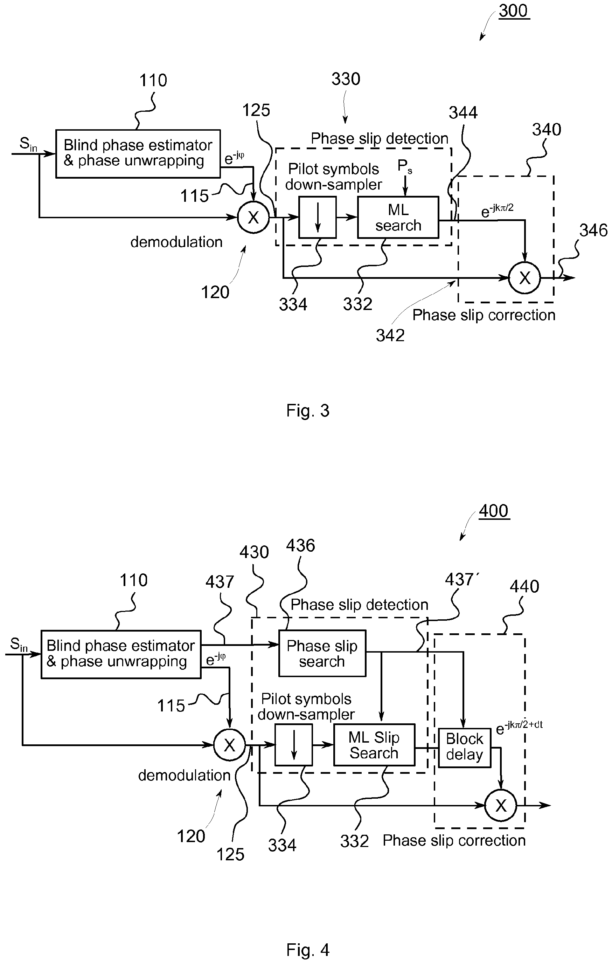

Turning now to Figs. 3 to 6, some exemplary embodiments of the apparatus 100 will be described in more detail. Thereby functionalities that have already been described above will not be detailed again for the sake of brevity.

Fig. 3 depicts a schematic block diagram of an apparatus 300 for carrier (or channel) phase recovery according to a further embodiment. We may define this embodiment as "Hard-ML detector with slip correction".

The functional blocks 110 and 120 have already been thoroughly described above. Phase slip detection is performed by a maximum likelihood (ML) sequence detector 332 comprised by the phase slip detector 330. The maximum likelihood (ML) sequence detector 332 works only on demodulated pilots which may be obtained from the demodulated signal 125 by proper down-sampling (recall that consecutive pilot symbol positions may have a periodicity of M symbols) by means of a down-sampler 334. The ML sequence detector 332 may provide "hard" decisions on the channel states, and hence on a phase slip, in correspondence to each received and demodulated pilot symbol. The corresponding trellis diagram of the pilot symbol phase for a 4-fold symmetry modulation format (e.g. QPSK) is shown in Fig. 2c. For example, the well-known Viterbi algorithm can be used to efficiently solve the ML sequence detection in block 332.

The Viterbi decoder 332 may require an "a priori" probability $P_S$ (or $P_T$) of phase slip for the channel 200 to correctly compute the ML search, wherein the probability can either be an input to the receiver or be derived by means of a channel phase slip estimator algorithm. Hence, the phase slip detector 330 may be operable to detect the phase slip based on a priori probabilities indicative of possible channel state transitions between consecutive pilot symbols, wherein the possible channel state transitions may form a trellis 250 corresponding to a Markov chain modeling a communication channel 200 for the (carrier) signal $S_{in}$. Note that the "a priori" probability $P_S$ may be determined in many possible ways. For example, the probability $P_S$ may be computed analytically or determined heuristically and provided to the phase slip detector 330. According to an exemplary embodiment the probability $P_S$ of a phase slip could be extrapolated from a filter bandwidth of the blind phase estimator 110 by means of empirical extrapolation, wherein said filter bandwidth is correlated to the channel phase noise statistics. That is to say, the phase slip detector 330 may further comprise circuitry operable to obtain an a priori probability $P_S$ (or $P_T$) derived from a bandwidth of a filter used by the phase estimator 110 for blind estimation of the channel phase by means of empirical extrapolation . According to other embodiments the a priori probability information can also be obtained by the process of phase unwrapping performed by the blind phase estimator 110. Considering the above example, if we get the results as $\theta^u_{k-1} = \pi/10$ and $\theta^r_k = 9\pi/10$, $\theta^r_k$ may be unwrapped to - $\pi/10$ instead of keeping it $9\pi/10$, because the phase noise step $-\pi/5$ is more reasonable than $4\pi/5$. This unwrapping decision is afflicted with particular uncertainty, i.e. a probability of a phase slip. This symbol-by-symbol phase slip uncertainty or probability information from the blind phase estimator 110 may be used as a priori probability information for the phase slip detector 330. In other words, the a priori probability information may be obtained on a symbol-by-symbol basis from the phase estimator 110 based on a computation of a probability of each symbol phase to lead to a wrong phase unwrapping decision.

If a phase slip is detected by block 330, corresponding phase slip correction may be performed in the phase corrector 340 by "flipping" the phase of the information symbols in the corresponding pilot block according to the detected state transition or phase slip, so that they are aligned with the actual receiver phase reference. Hence, the phase corrector 340 may comprise an input 342 for demodulated information symbols of the demodulated signal 125 and an input 344 for information on detected phase slip. An output 346 of the phase corrector 340 may provide phase (slip) corrected demodulated information symbols. In particular, a correction strategy of the phase (slip) corrector 340 may comprise phase "flipping" (phase rotation according to the detected phase slip) M/2 symbols preceding and following the pilot symbol for which the phase slip has been detected, where M equals to pilot period expressed in symbols. Thereby a pilot symbol may have associated thereto M/2 information symbols preceding and following the pilot symbol, wherein the pilot and the associated information symbols together from a symbol or pilot block. According to some embodiments the phase corrector 340 may be operable to correct a phase of demodulated symbols of the symbol block associated to the pilot symbol for which a phase slip has been detected.

The ML sequence decoder 332 can, however, also commit errors in detecting the channel states due to the presence of noise on the pilot symbols. As a consequence, a number of symbols in the pilot block may still be phase flipped with respect to the correct or actual receiver phase reference, (i.e. channel state). The probability of phase flip on each symbol after phase slip correction can be computed analytically from the Viterbi decoder probabilities of error, as a function of the pilot symbols signal-to-noise ratio and channel phase slip probability.

A further exemplary embodiment is shown in Fig. 4, which may be defined as "Hard-ML detector with fine slip correction".

Again, in phase slip detector 430 a coarse phase slip detection on pilot symbol basis may be performed by the ML sequence detector 332 which provides "hard" decisions on the channel states in correspondence to each received and demodulated pilot symbol of signal 125. However, in the embodiment of Fig. 4 the phase slip detector 430 additionally comprises a phase slip search circuit 436 which is operable or configured to determine the most likely information symbol within a detected pilot-block to have caused the phase slip detected on the reference pilot symbol of the pilot-block (fine phase slip detection). The phase slip search circuit 436 may use symbol-by-symbol uncertainty or probability information 437 (i.e., probability of each symbol phase to lead to a wrong phase unwrapping decision) provided by the blind phase estimator 110. At the same time said probability information 437 or a derivative 437' thereof corresponding to demodulated pilots may be used as a priori probability information for the ML sequence detector 332, as has been described above.

Given that a phase slip might have occurred on any symbol belonging to a certain pilot-block, the phase slip search circuit 436 may employ a more sophisticated slip search algorithm to determine the (information) symbol originating the slip event within said pilot-block. Given that phase slips are introduced by an erroneous decision in the process of phase unwrapping by the phase estimator 110, which depends on the absolute difference between the estimated phases of consecutive symbols, the phase estimator 110 or the phase slip search circuit 436 may associate a probability of phase slip to each symbol in the pilot block, computing the probability of each symbol phase to lead to a wrong unwrapping decision. This is what has been denoted as symbol-by-symbol phase slip uncertainty or probability information in the above example.

Outputs from the phase slip search circuit 436 may be used to take decisions on the phases of the information symbols in the pilot block. In case of "hard phase slip correction", the phase slip search circuit 436 may be operable to determine the most likely symbol within the pilot-block having originated the phase slip detected on the reference pilot symbol based on the symbol-by-symbol phase slip uncertainty or probability information from the blind phase estimator 110. Although we predict that the phase slip search block 436 might be beneficial for reducing the overall phase errors at the demodulator output, note that the success rate of the process of slip search is hard to be analytically formulated as the slip probability for each symbol will depend on the nonlinear phase noise properties of the channel, for which an analytical solution is missing.

According to the embodiment of Fig. 4 phase slip correction may then applied by "flipping" the phase of only those (information) symbols in the pilot-block for which a phase slip has been detected, starting from where the slip has been identified. That is to say, the phase corrector 440 may be operable to correct the phase of demodulated symbols of the symbol block starting from a symbol for which the phase slip has been detected, e.g. based on the symbol-by-symbol (a priori) probability information 437. Furthermore, the output probabilities 437 or 437' generated by the blind phase estimator 110 or the slip search can be used as "a priori" information for the Viterbi decoder 332. The embodiment of Fig. 4 may reduce the probability of error in the process of slip detection.

Yet a further embodiment may be denoted as the "Hard-ML detector with LLR erasure". Phase slip detection and correction may be performed as described for the embodiment of Fig. 3. However, in coincidence with the detection of a phase slip, reliability information (e.g. LLRs) of the information symbols in the respective pilot block for which a phase slip has been detected may be erased, i.e. set to zero, so that they may not contribute in the process of soft-decision FEC decoding. Hence, according to such an embodiment the apparatus may be operable to neutralize reliability information related to information symbols of the symbol block associated to a pilot symbol for which a phase slip has been detected. This embodiment may reduce the BER penalties associated with errors in the process of slip detection.

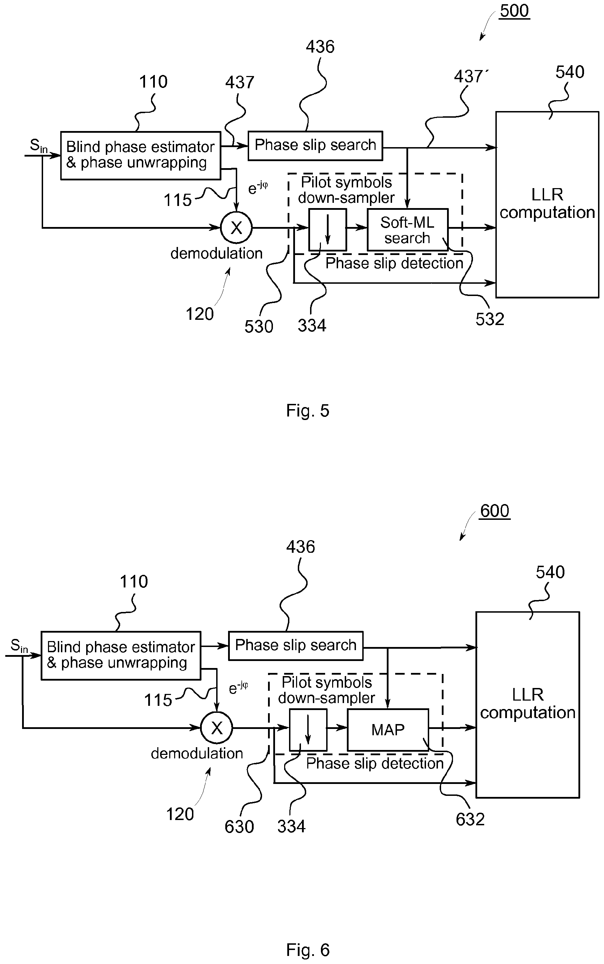

Another embodiment of a carrier phase recovery apparatus 500 is shown in Fig. 5. We denote this embodiment as "Soft-ML detector with soft slip correction". Slip detection may be performed by the maximum likelihood sequence detector (ML), which may be based on the well-known Soft Output Viterbi Algorithm (SOVA).

The SOVA employed by the soft output ML sequence decoder 532 differs from the classical Viterbi algorithm, described with respect to the embodiments of Fig. 3 and 4, in that it uses a modified path metric which takes into account the a priori probabilities of the input symbols (pilots), and produces a soft output on the channel state indicating the reliability of the decision. According to embodiments the output probabilities 437, 437' from the slip search algorithm can be used as "a-priori" input probabilities to the soft output ML sequence decoder 532 to compute channel state probabilities and/or as input for a subsequent (information) symbols LLR calculation block 540. Phase slip correction may be performed by using the resultant channel status probabilities in the computation of the LLR of the information symbols in the pilot block, used for SD-FEC decoding. Hence, in case of "soft phase slip correction" the output probabilities from the phase slip detector 530 can be used for calculating channel state probabilities and/or directly in a computation of LLRs for the information symbols in the pilot block for which the phase slip has been detected. This embodiment may further increase the robustness of the slip detector 530 to erroneous slip detection in presence on noise in the pilot symbols, at the cost of introducing more implementation complexity with respect to the previous embodiments based on the simpler Viterbi decoder.

The exemplary embodiment illustrated in Fig. 6 may be referred to as "MAP detector with soft slip correction".

Here, coarse slip detection (on pilot basis) may be performed by a Maximum A Posteriori (MAP) detector 632, which can make use of the BCJR algorithm, see L. Bahl, J. Cocke, F. Jelinek and J. Raviv, "Optimal Decoding of Linear Codes for minimizing symbol error rate", IEEE Transactions on Information Theory, Volume: IT-20(2), Pages: 284-287, March 1974. Similarly to the SOVA, the BCJR may produce a soft output on the channel status with the reliability of the decision. The MAP differs from the ML detectors, described in the previous embodiments, in that it makes a symbol-by-symbol decision computing the maximum a posteriori probability for a channel state of the trellis 250, rather than taking a decision on the most likely channel states sequence. The output probabilities 437, 437' from the phase slip searcher 436 can again be used as "a-priori" input probabilities to the MAP decoder 632 to compute the channel state probabilities and/or as input for subsequent the symbols LLR calculation in block 540. In the embodiment of Fig. 6 phase slip correction may be performed by using the resultant channel state probabilities in the computation of the LLRs of the information symbols in the detected pilot block, used for soft-decision FEC. This embodiment may further increase the robustness of the slip detector 630 to erroneous slip detection in presence on noise at the pilot symbols, however at the cost of introducing more implementation complexity with respect to the previous embodiments based on the Viterbi decoder.

Here we present the calculation of symbols LLR taking into account the channel phase state probabilities generated by the MAP or the ML algorithm. Calculations refer to the case of constellation with $\pi$ symmetry, such as BPSK, and could be extended for modulation formats with different symmetry, such as QPSK.

The channel phase state LLR may be defined as the logarithm of the ratio between of the probability of the channel being in status "0" over the probability for the channel to be in the status "1", which corresponds to $\pi$.

Let's define:

- L is the number of symbols between two subsequent pilot symbols.
- $LLR_t$, $LLR_{t+1}$ are the channel phase status LLR computed by the MAP or ML for pilot $t$ and for the subsequent pilot $t+1$
- LLR equals to $+\infty$ indicates that transmitter and receiver share the same absolute phase reference, and LLR equals to $-\infty$ indicates that receiver phase reference is offset by $\pi$.
- $LLR_{ch}(i)$ is the channel phase state LLR for the $i^{th}$ symbol obtained interpolating $LLR_t$, $LLR_{t+1}$, where $t < i < t+1$

The channel phase state LLR for the symbols between the pilots can be obtained by interpolation between $LLR_t$, $LLR_{t+1}$

$$LLR_{ch}(i) = Max\left\{LLR_t + Ln\left(1 - \frac{i}{L}\right), LLR_{t+1} + Max\left\{LLR_t, Ln\left(\frac{i}{L}\right)\right\}\right\} + \\ - Max\left\{LLR_{t+1} + Ln\left(1 - \frac{i}{L}\right), LLR_t + Max\left\{-LLR_t, Ln\left(\frac{i}{L}\right)\right\}\right\}$$

$$S(i) = Sign(LLR_{ch}(i))$$

$$M(i) = |LLR_{ch}(i)|$$

For a Max-Log approximation for the channel phase state LLR, let's define:

- $x(i) = i^{th}$ symbol
- LLR scaling factor $\alpha = 2a/\sigma^2$, with a being the amplitude of a BPSK-modulated symbol

The expression for the symbol LLR$_U$, taking into account the channel phase state LLR, for non-differentially encoded symbols is given by:

$$LLR_U(i) = S(i)Sign(x(i))Min\{M(i), |\alpha x(i)|\}$$

.

Hence, the apparatus 500, 600 may be operable to compute reliability information (LLRs) for the information symbols based on probabilities and/or reliability information for channel states or channel state transitions

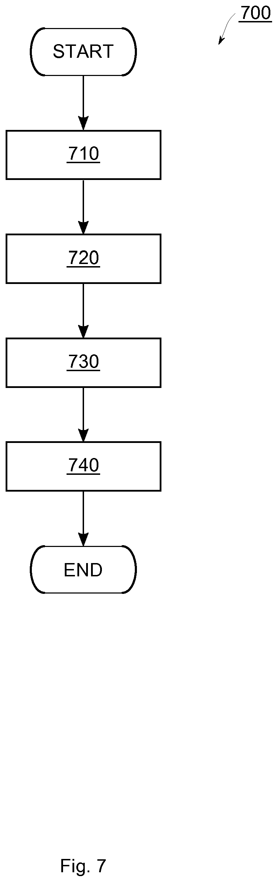

Fig. 7 schematically illustrates a flow chart of a method 700 for recovering an absolute phase of a received signal S$_{in}$ conveying pilot and information symbols over a communication channel, e.g. an optical channel.

According to embodiments the method 700 comprises determining 710 a phase estimate 115 of the phase of the received carrier signal or the communication channel based on the received carrier signal S$_{in}$. Further, the method 700 comprises determining 720 demodulated pilot and information symbols based on a coherent reception of the received pilot and information symbols in signal S$_{in}$ using the determined phase estimate 115. Also, method 700 includes detecting 730 a phase slip based on phase difference between at least one demodulated pilot symbol and at least one corresponding transmitted pilot symbol. Additionally method 700 comprises correcting 740 a phase of demodulated information symbols based on the detected phase slip. Note that the method may be carried out by apparatus embodiments which have been described above.

Embodiments may further provide a computer program having a program code for performing one of the above method(s), when the computer program is executed on a computer or processor. A person of skill in the art would readily recognize that steps of various above-described methods may be performed by programmed computers. Herein, some embodiments are also intended to cover program storage devices, e.g., digital data storage media, which are machine or computer readable and encode machine-executable or computer-executable programs of instructions, wherein the instructions perform some or all of the acts of the above-described methods. The program storage devices may be, e.g., digital memories, magnetic storage media such as magnetic disks and magnetic tapes, hard drives, or optically readable digital data storage media. The embodiments are also intended to cover computers programmed to perform the acts of the above-described methods or (field) programmable logic arrays ((F)PLAs) or (field) programmable gate arrays ((F)PGAs), programmed to perform the acts of the above-described methods.

As it will become apparent to the skilled person embodiments may offer a low complexity solution for demodulation in presence of phase slip, for example enabling the design of a 400Gbit/s DSP block for optical communications in one integrated circuit. Embodiments may enable to achieve a required receiver performance to allow 400Gbit/s transmissions over long haul reach (e.g. 1500Km). Embodiments may enable to improve the transmission performance for 100G and 400G with respect to existing product solutions. Embodiments may reduce complexity and power consumption of the receiver DSP by 30% with respect to state-of-the-art 100Gbit/s products which employ iterative differential decoding. By embodiments 100Gbit/s coherent systems may gain an improved sensitivity in excess of 1dB with respect to solutions based on differential encoding.

Functional blocks shall be understood as blocks comprising circuitry that is configured to perform a certain function, respectively. Hence, a "means for s.th." may as well be understood as a "means configured to or suited for s.th.". A means configured to perform a certain function does, hence, not imply that such means necessarily is performing the function (at a given time instant). Functions of various elements shown in the figures may be provided through the use of dedicated hardware as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods.

Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some embodiments a single act may include or may be broken into multiple sub acts. Such sub acts may be included and part of the disclosure of this single act unless explicitly excluded.

**Claims**

1.  Apparatus (100; 300; 400; 500; 600) for recovering a phase of a received signal ($S_{in}$) carrying pilot and information symbols, wherein the received signal has been transmitted over a communication channel (200), the apparatus comprising:

    a phase estimator (110) configured to blindly estimate symbol-by-symbol phase estimates (115) using the received signal, wherein the phase estimator (110) commits a phase slip with a phase slip probability ($P_S$, $P_T$) depending on the communication channel (200),

       wherein the blindly estimated symbol-by-symbol phase estimates comprise a blindly estimated phase estimate for each pilot and information symbol of the received signal, and
       wherein the phase estimator (110) is further configured to generate symbol-by-symbol phase slip probability information (437);

    a demodulator (120) configured to determine demodulated pilot and information symbols (125) based on a coherent reception of the received pilot and information symbols using the blindly estimated symbol-by-symbol phase estimates (115);
    a phase slip detector (130; 330; 430; 530; 630) configured to detect the phase slip based on a phase difference between at least one demodulated pilot symbol and at least one corresponding transmitted pilot symbol; and
    a phase corrector (140; 340; 440; 540) configured to correct a phase of demodulated information symbols based on the detected phase slip,
    wherein the phase slip corrector (332; 432; 532) is further configured to correct the phase of the demodulated information symbols starting from a symbol for which the phase slip has been detected based on the symbol-by-symbol probability information.

2.  The apparatus (100; 300; 400; 500; 600) according to claim 1, wherein the detected phase slip corresponds to a transition between two channel states of a Markov chain modeling the communication channel (200) with memory (225), wherein a channel state corresponds to one of a plurality of rotation angles of a signal constellation diagram, and wherein the phase slip detector (130; 330; 430; 530; 630) is configured to base its detection of the phase slip on an observation of a sequence of received pilot symbols indicating a sequence of channel states.

3.  The apparatus (100; 300; 400; 500; 600) according to claim 2, wherein the phase slip detector (130; 330; 430; 530; 630) comprises a maximum likelihood sequence, MLS, detector (332; 432; 532) or a maximum a posteriori probability, MAP, detector (632), the MLS or MAP detector having a detector input for the sequence of received pilot symbols and a detector output indicative of a channel state and/or a channel state transition corresponding to the phase slip.

4.  The apparatus (100; 300; 400; 500; 600) according to claim 2, wherein the phase slip detector (130; 330; 430; 530; 630) is configured to provide a hard or a soft decision indicative of a channel state and/or a channel state transition at the detector output.

5.  The apparatus (100; 300; 400; 500; 600) according to claim 4, wherein the phase slip detector (130; 330; 430; 530; 630) is configured to perform Maximum Likelihood Sequence, MLS, detection based on a hard or soft output Viterbi algorithm or to perform Maximum A Posteriori probability, MAP, detection based on the Bahl, Cocke, Jelinek Raviv algorithm.

6. The apparatus (100; 300; 400; 500; 600) according to claim 2, wherein the phase slip detector (130; 330; 430; 530; 630) is configured to detect the phase slip based on a priori probabilities ($P_T$) indicative of possible channel state transitions between consecutive pilot symbols, the possible channel state transitions forming a trellis (250) corresponding to the Markov chain.

7. The apparatus (100; 300; 400; 500; 600) according to claim 6, wherein the phase slip detector (130; 330; 430; 530; 630) further comprises circuitry configured to obtain an a priori probability ($P_T$) derived from:

   a bandwidth of a filter used by the carrier phase estimator for blind estimation of the carrier phase by means of empirical extrapolation, or
   a symbol-by-symbol phase probability information (437) provided by the phase estimator (110) and denoting a probability of a determined symbol-by-symbol phase estimate (115) lead to a wrong phase unwrapping decision.

8. The apparatus (100; 300; 400; 500; 600) according to claim 1, wherein one or more pilot symbols has associated thereto one or more information symbols in a symbol block, and wherein the phase slip detector (130; 330; 430; 530; 630) further comprises circuitry configured to obtain probabilities for channel states or channel state transitions for symbols of a symbol block.

9. The apparatus (100; 300; 400; 500; 600) according to claim 8, wherein the probabilities are obtained on a symbol-by-symbol basis using a symbol-by-symbol phase slip probability information (437, $P_T$) provided by the phase estimator (110) and denoting a probability of a determined symbol-by-symbol phase estimate (115) to lead to a wrong phase unwrapping decision.

10. The apparatus (100; 300; 400; 500; 600) according to claim 1, wherein one or more pilot symbols has associated thereto one or more information symbols in a symbol block, and wherein the phase slip corrector (332; 432; 532) is configured to correct a phase of demodulated symbols of the symbol block.

11. The apparatus (100; 300; 400; 500; 600) according to claim 10, wherein the phase slip corrector (332; 432; 532) is configured to correct the phase of demodulated symbols of the symbol block starting from a symbol for which the phase slip has been detected based on symbol-by-symbol probability information.

12. The apparatus (100; 300; 400; 500; 600) according to claim 8, wherein the apparatus is configured to compute reliability information for the information symbols based on the probabilities for channel states or channel state transitions.

13. The apparatus (100; 300; 400; 500; 600) according to claim 1, wherein the received signal is an optical signal of an optical communication system.

14. Method (700) for recovering a phase of a received signal ($S_{in}$) carrying pilot and information symbols, wherein the received signal has been transmitted over a communication channel (200), the method comprising:

   blindly estimating (710) symbol-by-symbol phase estimates (115) using the received signal ($S_{in}$), wherein blindly estimating the symbol-by-symbol phase estimate (115) yields a phase slip with a phase slip probability ($P_S$, $P_T$) depending on the communication channel (200), and wherein blindly estimating symbol-by-symbol phase estimates comprises blindly estimating phase estimates for each pilot and information symbol of the received signal and wherein blindly estimating (710) symbol-by-symbol phase estimates (115) generates symbol-by-symbol phase slip probability information (437);
   determining (720) demodulated pilot and information symbols based on a coherent reception of the received pilot and information symbols using the blindly estimated symbol-by-symbol phase estimates (115);
   detecting (730) the phase slip based on phase difference between at least one demodulated pilot symbol and at least one corresponding transmitted pilot symbol; and
   correcting (740) a phase of demodulated information symbols based on the detected phase slip, and correcting the phase of the demodulated information symbols starts from a symbol for which the phase slip has been detected based on the symbol-by-symbol probability information.

15. Computer program having a program code which, when the computer program is executed on a programmable hardware device, causes the device to carry out the method according to claim 14.

**Patentansprüche**

1. Vorrichtung (100; 300; 400; 500; 600) zur Wiederherstellung einer Phase eines empfangenen Signals ($S_{in}$), das Pilot- und Informationssymbole überträgt, wobei das empfangene Signal über einen Kommunikationskanal (200) übertragen wurde, wobei die Vorrichtung umfasst:

   einen Phasenschätzer (110), der dazu ausgebildet ist, um Symbol-für-Symbol-Phasenschätzungen (115) unter Verwendung des empfangenen Signals blind abzuschätzen, wobei der Phasenschätzer (110) einen Phasenfehler mit einer Phasenfehlerwahrscheinlichkeit ($P_S$, $P_T$) in Abhängigkeit des Kommunikationskanals (200) übergibt,

   wobei die blind geschätzten Symbol-für-Symbol-Phasenschätzungen eine blind geschätzte Phasenschätzung für jedes Pilot- und Informationssymbol des empfangenen Signals umfassen, und
   wobei der Phasenschätzer (110) ferner dazu ausgebildet ist, eine Symbol-für-Symbol-Phasenfehlerwahrscheinlichkeitsinformation (437) zu generieren;

   einen Demodulator (120), der dazu ausgebildet ist, demodulierte Pilot- und Informationssymbole (125) basierend auf einem zusammenhängenden Empfang der empfangenen Pilot- und Informationssymbole unter Verwendung der blind abgeschätzten Symbol-für-Symbol-Phasenschätzungen (115) zu bestimmen;
   einen Phasenfehlerdetektor (130; 330; 430; 530; 630), der dazu ausgebildet ist, den Phasenfehler basierend auf einer Phasendifferenz zwischen zumindest einem demodulierten Pilotsymbol und zumindest einem korrespondierenden übertragenen Pilotsymbol zu detektieren; und
   einen Phasenkorrektor (140; 340; 449; 540), der dazu ausgebildet ist, eine Phase demodulierter Informationssymbole basierend auf dem detektierten Phasenfehler zu korrigieren,
   wobei der Phasenfehlerkorrektor (332; 432; 532) zudem dazu ausgebildet ist, die Phase der demodulierten Informationssymbole, beginnend von einem Symbol, für das der Phasenfehler basierend auf der Symbol-für-Symbol-Wahrscheinlichkeitsinformation detektiert wurde, zu korrigieren.

2. Die Vorrichtung (100; 300; 400; 500; 600) nach Anspruch 1, wobei der detektierte Phasenfehler zu einem Übergang zwischen zwei Kanalzuständen einer Markov-Kette korrespondiert, die den Kommunikationskanal (200) mit einem Speicher (225) abbildet, wobei ein Kanalzustand einem von mehreren Rotationswinkeln eines Signalkonstellationsdiagramms entspricht, und wobei der Phasenfehlerdetektor (130; 330; 430; 530; 630) so ausgebildet ist, dass seine Detektion des Phasenfehlers auf einer Beobachtung einer Sequenz empfangener Pilotinformationen, die eine Sequenz der Kanalzustände anzeigen, beruht.

3. Die Vorrichtung (100; 300; 400; 500; 600) nach Anspruch 2, wobei der Phasenfehlerdetektor (130; 330; 430; 530; 630) eine Detektor einer maximalen Wahrscheinlichkeitssequenz, MLS, (332; 432; 532) oder einen Detektor einer maximalen A-posteriori-Wahrscheinlichkeit, MAP, (632) umfasst,
   wobei der MLS oder MAP Detektor einen Detektoreingang für die Sequenz empfangener Pilotsymbole und einen Detektorausgang, der einen Kanalzustand und/oder einen zum Phasenfehler korrespondierenden Kanalzustandsübergang anzeigt, aufweist.

4. Die Vorrichtung (100; 300; 400; 500; 600) nach Anspruch 2, wobei der Phasenfehlerdetektor (130; 330; 430; 530; 630) dazu ausgebildet ist, eine harte oder weiche Entscheidung, die einen Kanalzustand und/oder einen Kanalzustandsübergang am Detektorausgang anzeigt, bereitzustellen.

5. Die Vorrichtung (100; 300; 400; 500; 600) nach Anspruch 4, wobei der Phasenfehlerdetektor (130; 330; 430; 530; 630) dazu ausgebildet ist, eine Detektion einer maximalen Wahrscheinlichkeitssequenz, MLS, basierend auf einem harten oder weichen Ausgangs-Viterbi-Algorithmus auszuführen oder eine Detektion einer maximalen A-posteriori-Wahrscheinlichkeit, MAP basierend auf dem Bahl-Cocke-Jelinek-Raviv-Algorithmus auszuführen.

6. Die Vorrichtung (100; 300; 400; 500; 600) nach Anspruch 2, wobei der Phasenfehlerdetektor (130; 330; 430; 530; 630) dazu ausgebildet ist, den Phasenfehler zu erfassen, basierend auf A-priori-Wahrscheinlichkeiten ($P_T$), die mögliche Kanalzustandsübergänge zwischen aufeinanderfolgenden Pilotsymbolen anzeigen, wobei die möglichen Kanalzustandsübergänge ein zu einer Markov-Kette korrespondierendes Gitter (250) bilden.

7. Die Vorrichtung (100; 300; 400; 500; 600) nach Anspruch 6, wobei der Phasenfehlerdetektor (130; 330; 430; 530; 630) ferner eine Schaltung umfasst, die dazu ausgebildet ist, eine A-priori-Wahrscheinlichkeit ($P_T$) zu erhalten, abgeleitet von:

einer Bandbreite eines Filters, der durch den Trägerphasenschätzer zur blinden Schätzung der Trägerphase mittels empirischer Extrapolation genutzt wird, oder

einer Symbol-für-Symbol-Phasenwahrscheinlichkeitsinformation (437), die durch den Phasenschätzer (110) bereitgestellt wird und eine Wahrscheinlichkeit einer bestimmten Symbol-für-Symbol-Phasenschätzung (115) anzeigt, die zu einer falschen Phasenabwicklungsentscheidung führt.

8. Die Vorrichtung (100; 300; 400; 500; 600) nach Anspruch 1, wobei ein oder mehrere Pilotsymbole einem oder mehreren Informationssymbolen in einem Symbolblock zugeordnet sind, und wobei der Phasenfehlerdetektor (130; 330; 430; 530; 630) zudem eine Schaltung umfasst, die dazu ausgebildet ist, Wahrscheinlichkeiten für Kanalzustände oder Kanalzustandsübergänge für Symbole eines Symbolblocks zu erhalten.

9. Die Vorrichtung (100; 300; 400; 500; 600) nach Anspruch 8, wobei die Wahrscheinlichkeiten auf einer Symbol-für-Symbol-Basis unter Verwendung einer Symbol-für-Symbol-Phasenfehlerwahrscheinlichkeitsinformation (437, $P_T$), die durch den Phasenschätzer (110) bereitgestellt wird und eine Wahrscheinlichkeit einer bestimmten Symbol-für-Symbol-Phasenschätzung (115) anzeigt, die zu einer falschen Phasenabwicklungsentscheidung führt, erhalten werden.

10. Die Vorrichtung (100; 300; 400; 500; 600) nach Anspruch 1, wobei ein oder mehrere Pilotsymbole einem oder mehreren Informationssymbolen in einem Symbolblock zugeordnet sind, und wobei der Phasenfehlerkorrektor (332; 432; 532) dazu ausgebildet ist, eine Phase demodulierter Symbole des Symbolblocks zu korrigieren.

11. Die Vorrichtung (100; 300; 400; 500; 600) nach Anspruch 10, wobei der Phasenfehlerkorrektor (332; 432; 532) dazu ausgebildet ist, die Phase demodulierter Symbole des Symbolblocks, beginnend bei einem Symbol, für das der Phasenfehler basierend auf einer Symbol-für-Symbol-Wahrscheinlichkeitsinformation detektiert wurde, zu korrigieren.

12. Die Vorrichtung (100; 300; 400; 500; 600) nach Anspruch 8, wobei die Vorrichtung dazu ausgebildet ist, eine Zuverlässigkeitsinformation für die Informationssymbole basierend auf der Wahrscheinlichkeit für Kanalzustände oder Kanalzustandsübergänge zu berechnen.

13. Die Vorrichtung (100; 300; 400; 500; 600) nach Anspruch 1, wobei das empfangene Signal ein optisches Signal eines optischen Kommunikationssystems ist.

14. Verfahren (700) zur Wiederherstellung einer Phase eines empfangenen Signals ($S_{in}$), das Pilot- und Informationssymbole überträgt, wobei das empfangene Signal über einen Kommunikationskanal (200) übertragen wurde, wobei das Verfahren umfasst:

blindes Abschätzen (710) von Symbol-für-Symbol-Phasenschätzungen (115) unter Verwendung des empfangenen Signals ($S_{in}$), wobei das blinde Abschätzen der Symbol-für-Symbol-Phasenschätzung (115) einen Phasenfehler mit einer Phasenfehlerwahrscheinlichkeit ($P_S$, $P_T$) in Abhängigkeit des Kommunikationskanals (200) ergibt, und wobei das blinde Abschätzen der Symbol-für-Symbol-Phasenschätzungen das blinde Abschätzen der Phasenschätzungen für jedes Pilot- und Informationssymbol des empfangenen Signals umfasst und wobei das blinde Abschätzen (710) von Symbol-für-Symbol-Phasenschätzungen (115) eine Symbol-für-Symbol-Phasenfehlerwahrscheinlichkeitsinformation (437) generiert;
Bestimmen (720) demodulierter Pilot- und Informationssymbole basierend auf einem zusammenhängenden Empfang der empfangenen Pilot- und Informationssymbole unter Verwendung der blind abgeschätzten Symbol-für-Symbol-Phasenschätzungen (115);
Detektieren (730) des Phasenfehlers basierend auf einer Phasendifferenz zwischen zumindest einem demodulierten Pilotsymbol und zumindest einem korrespondierenden übertragenen Pilotsymbol; und
Korrigieren (740) einer Phase demodulierter Informationssymbole basierend auf dem detektierten Phasenfehler und Korrigieren der Phase demodulierter Informationssymbole, beginnend von einem Symbol, für das der Phasenfehler basierend auf der Symbol-für-Symbol-Wahrscheinlichkeitsinformation detektiert wurde.

15. Computerprogramm mit einem Programmcode, der, wenn das Computerprogramm auf einer programmierbaren Hardwarevorrichtung ausgeführt wird, die Vorrichtung veranlasst, das Verfahren nach Anspruch 14 auszuführen.

**Revendications**

1. Équipement (100; 300; 400; 500; 600) destiné à la récupération d'une phase d'un signal reçu (S$_{in}$) comportant des symboles de pilotage et d'informations, selon lequel le signal reçu a été transmis via un canal de communication (200), l'équipement comprenant :

   un estimateur de phase (110) configuré pour estimer à l'aveugle des estimations de phase symbole-par-symbole (115) mettant en œuvre le signal reçu, selon lequel l'estimateur de phase (110) effectue un glissement de phase ayant une probabilité de glissement de phase (Ps, Pt) dépendante du canal de communication (200) ;

      selon lequel les estimations de phase symbole-par-symbole estimées à l'aveugle comprennent une estimation de phase estimée à l'aveugle pour chaque symbole de pilotage et d'information du signal reçu ; et selon lequel l'estimateur de phase (110) est en outre configuré pour générer des informations de probabilité de glissement de phase symbole-par-symbole (437) ;

   un démodulateur (120) configuré pour calculer des symboles démodulés de pilotage et d'informations (125) sur la base d'une réception cohérente des symboles reçus de pilotage et d'informations mettant en œuvre les estimations de phase symbole-par-symbole estimées à l'aveugle (115) ;
   un détecteur de glissement de phase (130; 330; 430; 530; 630) configuré pour détecter le glissement de phase sur la base d'une différence de phase entre au moins un symbole de pilotage démodulé et au moins un symbole de pilotage transmis correspondant; et
   un correcteur de phase (140; 340; 440; 540) configuré pour corriger une phase de symboles d'informations démodulés sur la base du glissement de phase détecté ;
   selon lequel le correcteur de glissement de phase (332; 432; 532) est en outre configuré pour corriger la phase des symboles démodulés d'informations en commençant par un symbole pour lequel le glissement de phase a été détecté sur la base des informations de probabilité symbole-par-symbole.

2. Équipement (100; 300; 400; 500; 600) selon la revendication 1, selon lequel le glissement de phase détecté correspond à une transition entre deux états de canal d'une chaîne de Markov modélisant le canal de communication (200) avec de la mémoire (225), selon lequel un état de canal correspond à un angle parmi une pluralité d'angles de rotation d'un diagramme de constellation de signal, et selon lequel le détecteur de glissement de phase (130; 330; 430; 530; 630) est configuré pour baser la détection du glissement de phase sur une observation d'une séquence de symboles reçus de pilotage indiquant une séquence d'états de canal.

3. Équipement (100; 300; 400; 500; 600) selon la revendication 2, selon lequel le détecteur de glissement de phase (130; 330; 430; 530; 630) comprend un détecteur de séquence à probabilité maximale "MLS" (332; 432; 532) ou un détecteur à probabilité maximale a posteriori "MAP" (632), le détecteur MLS ou le détecteur MAP présentant une entrée de détecteur pour la séquence de symboles reçus de pilotage et une sortie de détecteur indiquant un état de canal et/ou une transition d'état de canal correspondant au glissement de phase.

4. Équipement (100; 300; 400; 500; 600) selon la revendication 2, selon lequel le détecteur de glissement de phase (130; 330; 430; 530; 630) est configuré pour fournir une décision définitive ou une décision souple indiquant un état de canal et/ou une transition d'état de canal au niveau de la sortie du détecteur.

5. Équipement (100; 300; 400; 500; 600) selon la revendication 4, wherein selon lequel le détecteur de glissement de phase (130; 330; 430; 530; 630) est configuré pour effectuer de la détection à séquence de probabilité maximale "MLS" sur la base de sorties d'algorithme de Viterbi définitives ou souples ou pour effectuer de la détection de probabilité maximale a posteriori "MAP" sur la base de l'algorithme de Bahl, Cocke, Jelinek Raviv.

6. Équipement (100; 300; 400; 500; 600) selon la revendication 2, selon lequel le détecteur de glissement de phase (130; 330; 430; 530; 630) est configuré pour détecter le glissement de phase sur la base de probabilités a priori (Pt) indiquant des transitions possibles d'état de canal entre des symboles de pilotage consécutifs, les transitions possibles d'état de canal formant un treillis (250) correspondant à la chaîne de Markov.

7. Équipement (100; 300; 400; 500; 600) selon la revendication 6, selon lequel le détecteur de glissement de phase (130; 330; 430; 530; 630) comprend en outre des circuits configurés pour obtenir une probabilité a priori (Pt) dérivée de :

un filtre de largeur de bande utilisé par l'estimateur de phase porteuse pour l'estimation à l'aveugle de la phase porteuse par le biais d'une extrapolation empirique ; ou

informations de probabilité de phase symbole-par-symbole (437) fournies par l'estimateur de phase (110) et signifiant une probabilité d'une estimation de phase calculée symbole-par-symbole (115) conduisant à une mauvaise décision de déroulement de phase.

8. Équipement (100; 300; 400; 500; 600) selon la revendication 1, selon lequel un ou plusieurs symboles de pilotage présente un ou plusieurs symboles d'informations y associés dans un bloc de symboles, et selon lequel le détecteur de glissement de phase (130; 330; 430; 530; 630) comprend en outre des circuits configurés pour obtenir des probabilités pour des états de canal ou des transitions d'état de canal pour des symboles d'un bloc de symboles.

9. Équipement (100; 300; 400; 500; 600) selon la revendication 8, selon lequel les probabilités sont obtenues sur une base symbole-par-symbole mettant en œuvre des informations de probabilité de glissement de phase symbole-par-symbole (437, Pt) fournies par l'estimateur de phase (110) et signifiant une probabilité d'une estimation calculée de phase symbole-par-symbole (115) conduisant à une mauvais décision de déroulement de phase.

10. Équipement (100; 300; 400; 500; 600) selon la revendication 1, selon lequel un ou plusieurs symboles de pilotage présente un ou plusieurs symboles d'informations y associés dans un bloc de symboles, et selon lequel le correcteur de glissement de phase (332; 432; 532) est configuré pour corriger une phase de symboles démodulés du bloc de symboles.

11. Équipement (100; 300; 400; 500; 600) selon la revendication 10, selon lequel le correcteur de glissement de phase (332; 432; 532) est configuré pour corriger la phase de symboles démodulés du bloc de symboles en commençant par un symbole pour lequel le glissement de phase a été détecté sur la base d'informations de probabilité symbole-par-symbole.

12. Équipement (100; 300; 400; 500; 600) selon la revendication 8, selon lequel l'équipement est configuré pour calculer des informations de fiabilité pour les symboles d'informations sur la base des probabilités d'états de canal ou de transitions d'états de canal.

13. Équipement (100; 300; 400; 500; 600) selon la revendication 1, selon lequel le signal reçu est un signal optique d'un système de communication optique.

14. Procédé (700) de récupération d'une phase d'un signal reçu (Sin) comportant des symboles de pilotage et d'informations, selon lequel le signal reçu a été transmis via un canal de communication (200), le procédé comprenant :

l'estimation à l'aveugle (710) d'estimations de phase symbole-par-symbole (115) mettant en œuvre le signal reçu, selon lequel l'estimation à l'aveugle (115) de l'estimation de phase symbole-par-symbole fournit un glissement de phase présentant une probabilité de glissement de phase (Ps, Pt) dépendante du canal de communication (200), et selon lequel l'estimation à l'aveugle des estimations de phase symbole-par-symbole comprend l'estimation à l'aveugle des estimations de phase pour chaque symbole de pilotage et d'information du signal reçu et selon lequel l'estimation à l'aveugle (710) des estimations de phase symbole-par-symbole (115) génère des informations de probabilité de glissement de phase symbole-par-symbole (437) ;

le calcul (720) de symboles démodulés de pilotage et d'informations sur la base d'une réception cohérente des symboles reçus de pilotage et d'informations mettant en œuvre les estimations de phase symbole-par-symbole estimées à l'aveugle (115) ;

la détection (730) du glissement de phase sur la base d'une différence de phase entre au moins un symbole de pilotage démodulé et au moins un symbole de pilotage transmis correspondant ; et

la correction (740) d'une phase de symboles démodulés d'informations sur la base du glissement de phase détecté, et la correction de phase des symboles démodulés d'informations en commençant par un symbole pour lequel le glissement de phase a été détecté sur la base des informations de probabilité symbole-par-symbole.

15. Programme d'ordinateur présentant du code de programmation qui, lorsque le programme d'ordinateur est exécuté sur un dispositif matériel programmable, a pour effet de faire fonctionner le dispositif de manière à effectuer le procédé selon la revendication 14.

Fig. 1

110

Fig. 2a

200

210

Fig. 2b

$P_S$ = Probability of phase slip
$P_T$ = Binomial($M$,$P_S$)
$M$ = Pilot period
$y_n = x_n + n(\sigma)$
$y_n$ = Received$n^{th}$ pilot symbol
$x_n$ = Transmitter $n^{th}$ pilot symbol
$n$ = Additive Gaussian noise on pilots

Fig. 2c

300

Fig. 3

400

Fig. 4

500

110          437          436          437´          540

S_in → Blind phase estimator & phase unwrapping → Phase slip search → LLR computation

115 — e^{-jφ}

Pilot symbols down-sampler

X

demodulation

Soft-ML search

Phase slip detection

120          530          334          532

Fig. 5

600

110          436          540

S_in → Blind phase estimator & phase unwrapping → Phase slip search → LLR computation

115 — e^{-jφ}

Pilot symbols down-sampler

X

demodulation

MAP

Phase slip detection

120          630          334          632

Fig. 6

700

START

710

720

730

740

END

Fig. 7

**EP 2 806 584 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130064329 A1

### Non-patent literature cited in the description

- **M. MAGARINI ; L. BARLETTA ; A. SPALVIERI ; F. VACONDIO ; T. PFAU ; M. PEPE ; M. BER-TOLINI ; G. GAVIOLI.** Pilot-Symbols Aided Carrier Phase Recovery for 100G PM-QPSK Digital Coherent Receivers. *IEEE Photonics Technology Letters,* 2012, vol. 24 (9), 739-741

- **T. PFAU ; S. HOFFMANN ; R.NOE.** Hardware-efficient coherent digital receiver concept with feedforward carrier recovery for M-QAM constellations. *Journal of Lightwave Technology,* 2009, vol. 27 (8), 989-999

- **L. BAHL ; J. COCKE ; F. JELINEK ; J. RAVIV.** Optimal Decoding of Linear Codes for minimizing symbol error rate. *IEEE Transactions on Information Theory,* March 1974, vol. IT-20 (2), 284-287